# EUROPEAN PATENT APPLICATION

(11) **EP 4 696 141 A1**
(43) Date of publication of application: **18.02.2026**
(21) Application number: 24194052.7
(22) Date of filing: 12.08.2024
(51) Int. Cl.: A22C 25/08

(54) **A LIFT SYSTEM FOR PRODUCTS**

(71) Applicant: Carsoe Seefood ApS, 9220 Aalborg Øst (DK)
(72) Inventor: BRØCHNER LIND, Christian, 9270 Klarup (DK); VIBJERG LINDHOLM, Rasmus, 9530 Støvring (DK)
(74) Representative: Patrade A/S

(57) **Abstract**

The present invention relates to a lift system for lifting associated products, preferably said products being fish, said system comprising: a chute for receiving the products, said chute comprising: a first end and a second end, preferably the chute is being sloped towards the second end, a chute sliding hatch for holding in products being in the chute and releasing the products, when a container is ready to receive the products, said sliding hatch being arranged at the second end of the chute, a container, wherein the container is attached to a raising arrangement, said container comprises: a gate for opening and closing a side end of the container, a raising arrangement, for raising and lowering the container, a motor for facilitating the raising and lowering of the container via the raising arrangement, and a receiving section for receiving the products from the container.

Furthermore, the invention relates to a method for lifting products.

## Description

### FIELD OF THE INVENTION

The present invention relates to a lift system for lifting associated products, preferably said products being fish, said system comprising: a chute for receiving the products, said chute comprising: a first end and a second end, preferably the chute is being sloped towards the second end, a chute sliding hatch for holding in products being in the chute and releasing the products, when a container is ready to receive the products, said sliding hatch being arranged at the second end of the chute, a container, wherein the container is attached to a raising arrangement, said container comprises: a gate for opening and closing a side end of the container, a raising arrangement, for raising and lowering the container, a motor for facilitating the raising and lowering of the container via the raising arrangement, and a receiving section for receiving the products from the container, wherein the chute is arranged at a first height level, wherein the receiving section is arranged at a second height level, wherein said second height level is above the first height level, and wherein the container can be raised and lowered at least between the first and the second height level via the raising arrangement.

Furthermore, the invention relates to a method for lifting products, preferably said products being fish, wherein said method comprises the steps of: onloading products into a chute, preferably into a first end of the chute, onloading products into a container from the chute, preferably from a second end of the chute, said onloading being performed at a first height level, closing a sliding hatch of the chute, closing a gate of the container, raising the container via a raising arrangement, preferably, the closing of the gate and/or the sliding hatch is performed simultaneously as raising the container, opening the gate of the container, preferably, the opening of the gate is performed simultaneously as raising the container, aligning the container and a receiving section, offloading the product from the container into the receiving section, said offloading being performed at a second height level, closing a gate of the container, lowering the container via the raising arrangement, preferably, the closing of the gate is performed simultaneously as lowering the container, opening the sliding hatch of the chute, preferably, the opening of the gate is performed simultaneously as lowering the container, opening the gate of the container, preferably, the opening of the gate is performed simultaneously as lowering the container, aligning the container and the chute.

### BACKGROUND OF THE INVENTION

Within the area of handling products, especially when handling products that are to be transferred through several different parts of a system and are to be raised or lowered from a first height level to a second height level.

Today, numerous solutions of such system are available, however none of those system provides a system wherein a guarantee of not clipping, damaging, or anything the like is provided.

The systems available have an unacceptable high damaging rate of the products they handle, especially when handling products such as fish.

Hence, an improved system, preferably a non-damaging, efficient and reliable system, suitable for handling product, preferably fish or the like would be advantageous, and in particular a resistant, mechanical strong, economically, sustainable system with longevity would be advantageous.

### OBJECT OF THE INVENTION

It is an object of the present invention to provide an alternative to the prior art.

In particular, it may be seen as an object of the present invention to provide a lift system that solves the above mentioned problems.

### DESCRIPTION OF THE INVENTION

Thus, the above described object and several other objects are intended to be obtained in a first aspect of the invention by providing a lift system for lifting associated products, preferably said products being fish, said system comprising:
- a chute for receiving the products, said chute comprising:
   - a first end and a second end, preferably the chute is being sloped towards the second end,
   - a chute sliding hatch for holding in products being in the chute and releasing the products, when a container is ready to receive the products, said sliding hatch being arranged at the second end of the chute,
- a container, wherein the container is attached to a raising arrangement, said container comprises:
   - a gate for opening and closing a side end of the container,
- a raising arrangement, for raising and lowering the container,
- a motor for facilitating the raising and lowering of the container via the raising arrangement, and
- a receiving section for receiving the products from the container,

wherein the chute is arranged at a first height level,
wherein the receiving section is arranged at a second height level,
wherein said second height level is above the first height level, and
wherein the container can be raised and lowered at least between the first and the second height level via the raising arrangement.

The invention is particularly, but not exclusively, advantageous for providing a lift system improving the quality of the products being handled by the system.

A preferred example of products are fish, and when handling fish (and any other products) in the lift system, a guarantee of not clipping, damaging, or anything the like is provided.

The lift system is efficient and reliable, resistant, mechanical strong, and having longevity.

Moreover, the system is easy to install and easy to maintain.

Furthermore, if the system is arranged on a boat, the container is not submerged at its bottom position, such that the system is being 100% load waterline, and the chain sprocket will also be above the waterline.

An example of a preferred capacity of the lift system is:
- Approx. 130L fish in container
- With a filling time of 50s ≈ 89T/24H
- Sequence time ≈ 114s (incl. 50s load time)

In the context of the present invention, a "container" may be understood as bin, vessel, reservoir, tank, receptable, basket or the like.

In the context of the present invention, "gate" may be understood as hatch, such as a sliding hatch or the like.

In the context of the present invention, "product" may be understood as any product suitable for being handled in a lifting system according to the invention. A preferred product is fish or the like, any other product can be handled, such as corn, grain or the like. And moreover, it should be understood that both organic or non-organic products can be handled in the system, and both alive and non-alive products is suitable for being handled in the system.

In one embodiment of the invention the raising arrangement comprises:
- a sliding arrangement for facilitating the raising and lowering of the container, preferably comprising rails,
- a chain, such as an endless chain, and
- a chain shaft.

In one embodiment of the invention the raising arrangement is a column lift.

The embodiments of the raising arrangement are particularly, but not exclusively, advantageous for providing an efficient and reliable lifting system for raising and lowering the container from a first height level to a second height level, such as from a lower to a higher level.

In one embodiment of the invention, the container is attached to the raising arrangement via a sled, said sled being adapted for sliding in the sliding arrangement of the raising arrangement.

The embodiment is particularly, but not exclusively, advantageous for providing an attachment of the container to the raising arrangement being easy to install and easy to maintain.

If needed, the components of the raising arrangement are easily replaceable, without removing the sled - As an example by a removeable plate on the side of the raising arrangement, such as a column lift.

In one embodiment of the invention, the system comprises an encoder for providing feedback for speed control of the raising of the container, preferably said encoder being arranged on the raising arrangement, more preferably on a chain shaft of the raising arrangement.

The embodiment is particularly, but not exclusively, advantageous for providing feedback for speed control.

All speed control is preferably managed with the help of an encoder, preferably mounted on the chain shaft, which provides accurate feedback for maintaining the desired speeds.

Both the speed settings and the positions where speed changes occur can be adjusted from a Human-Machine Interface (HMI), allowing for flexible operation and optimization based on specific requirements for operation.

Upon initial power-up of the system, the encoder homes to the upper sensor to establish the starting position of the container.

Simple mode without encoder:
Within the invention, a simple mode, such as an emergency program is preferably provided. In such simple mode, the system operates using only the top and bottom sensors without encoder feedback. This mode is designed for basic operation without the need for precise speed control or encoder feedback.

In one embodiment of the invention, the motor is arranged at the upper part of the raising arrangement, preferably on the top of the raising arrangement.

The embodiment is particularly, but not exclusively, advantageous for keeping the motor from being submerged during operation, such as when being arranged on a boat.

In one embodiment of the invention, one or more sensors are arranged on the container, preferably on the upper part of the container.

In one embodiment of the invention the one or more sensors are:
- position sensor(s) for detecting the top and/or bottom position of the container, and/or
- end position sensor(s) for ensuring the container does not run past a predetermined end position.

Example of sensors may be:
- Position sensor to detect the top and bottom position of the basket. One for each position.
- End Position Sensors: To ensure the basket does not run past the end positions.

The embodiments of sensors are particularly, but not exclusively, advantageous for the matter of safety, such as by providing a system, wherein the entire process is monitored and controlled by an automated system that ensures safe operation. Sensors detect the position of the container and the status of the gate, providing feedback to the control system to prevent malfunctions. Emergency stop buttons and manual overrides are available for an operator to intervene if necessary.

If the lift reaches an end stop sensor, the system will stop, and the operator can manually remove the container and repair the fault, which is typically related to the primary sensor malfunctioning.

Furthermore, the preferred position of the sensors on the upper part of the container is keeping the sensors from being submerged during operation, such as when being installed on a boat.

Moreover, in an embodiment, a frequency inverter acts as the torque safety mechanism, preventing the container from running with an overload.

Emergency stop buttons and manual overrides are available for an operator to intervene if necessary.

In one embodiment of the invention, the container comprises:
- a sloped bottom, and/or
- one or more sloped sides.

The embodiment is particularly, but not exclusively, advantageous for ensuring the products from being damaged, such as ensuring the transfer, when fishes are sliding into the container from the chute.

In one embodiment of the invention, the container comprises:
- a tiltable bottom,
- preferably the tiltable bottom is an additional bottom arranged above a main bottom of the container.

In one embodiment, the bottom may run up 35 degrees when offloading.

The embodiments are particularly, but not exclusively, advantageous for obtain 100% emptying of the container.

In one embodiment of the invention, the gate of the container is adapted to:
- slide in a downward direction, when opening the gate, and
- slide in an upward direction, when closing the gate.

The embodiment is particularly, but not exclusively, advantageous for preventing the damaging of the products, such as fish.

In one embodiment of the invention, the container comprises sliding means for facilitating the sliding of the gate, and preferably wherein the sliding of the gate is adapted to be activated mechanically.

In one embodiment of the invention, the gate of the container is adapted to open when:
- the container is being lowered towards the bottom of the raising arrangement, such that the gate is at least partly open when the container reaches the first height level,
- the container is being raised towards the top of the raising arrangement, such that the gate is fully open when the container reaches the second height level.

The embodiment is particularly, but not exclusively, advantageous for ensuring an opening (and closing) of the gate is provided, when desired.

In one embodiment of the invention, the chute sliding hatch is adapted to:
- slide in a downward direction, when opening the hatch, and
- slide in an upwards direction, when closing the hatch.

The embodiment is particularly, but not exclusively, advantageous for providing a system, wherein the fishes, when being transferred from the chute to the container are not being damaged and are transferred in a controlled manner.

In one embodiment of the invention, the chute sliding hatch and/or the receiving section comprises a receiving portion for receiving a protrusion of the container.

The embodiment is particularly, but not exclusively, advantageous for providing a system, wherein:
- it is secured that the gate of the container and the hatch of the chute is being opened in an at least substantially synchronized manner, such that the fishes are transferred from the chute to the container in a controlled manner, and
- it is secured that the gate of the container is opened in an at least substantially synchronized manner according to its position of the receiving section, such that the fishes are transferred from the container to the receiving section in a controlled manner.

Moreover, the embodiment is advantageous for providing a mechanical construction ensuring that the container cannot be raised or lowered too much.

In one embodiment of the invention, the system further comprises two counterweight arrangements:
- a chute counterweight arrangement, arranged in connection to the chute, preferably on the chute,
   - wherein said chute counterweight arrangement is activated by the container, when said container is moving in a downwards direction towards the first height level,
   and/or
- a container counterweight arrangement, arranged in connection to the container, preferably at the container,
   - wherein said container counterweight arrangement is activated, when a protrusion of the container is received in a receiving portion of the chute or in a receiving portion of the receiving section.

In one embodiment of the invention:
- the chute counterweight arrangement and/or the container counterweight arrangement is adapted to provide a downwards movement of a counterweight, when the chute sliding hatch and/or container gate is opening,
   and
- the chute counterweight arrangement and/or the container counterweight arrangement is adapted to provide an upwards movement of a counterweight, when the chute sliding hatch and/or container gate is closing.

The embodiments are particularly, but not exclusively, advantageous for providing a system, wherein at least parts of the movements of the gate and/or hatches are mechanically constructed such as to ensure the opening and/or closing of the gate/hatches are provided in a controlled manner.

Moreover, the embodiments are advantageous for providing a system, wherein the protrusions and/or the counterweight are constructed in the system such as to mechanically provide a secure and well working system.

In one embodiment of the invention, the counterweight arrangement and/or the container counterweight arrangement comprises a chain.

In one embodiment of the invention, said chain is a stiff chain adapted to resist a push force and/or to provide a push force.

In one embodiment of the invention, said chain being connected to:
- the container counterweight in a first end of the chain and to the container gate in a second end of the chain,
   and/or
- the chute counterweight in a first end of the chain and to the chute hatch in a second end of the chain.

In one embodiment of the invention, the chain of the chute counterweight arrangement and/or the chain of the container counterweight arrangement is adapted to provide a push force to the container gate and/or to the chute hatch, when the gate and/or the hatch is opening in a downwards direction.

In one embodiment of the invention, the chain of the chute counterweight arrangement and/or the chain of the container counterweight arrangement is adapted to utilize the gravity to provide an upwards direction of the container gate and/or of the chute hatch, such that the gate and/or the hatch is closing.

The embodiments are particularly, but not exclusively, advantageous for providing a system, wherein at least parts of the movements of the gate and/or hatches are mechanically constructed such as to ensure the opening and/or closing of the gate/hatches are provided in a controlled manner.

In one embodiment of the invention, the lift system is arranged on a boat.

The embodiment is particularly, but not exclusively, advantageous for providing a system being beneficial for arranging on a boat, since the handling of fish in the system is seen as an optimal product to handle.

Moreover, the system is constructed such as to have the strength to be fully functioning, efficient and reliable, when arranged in a boat.

In one embodiment of the invention, the chute is adapted to contain substantially the same volume of products as the container.

The embodiment is particularly, but not exclusively, advantageous for preventing overflow, when the sliding hatch is released.

In one embodiment of the invention, the raising arrangement comprises a removable portion, preferably a removable plate on the side or a side of the raising arrangement.

The embodiment is particularly, but not exclusively, advantageous for providing a system, wherein a sled may be sliding on blocks, such as PEHD500 blocks, which are easily replaced, without removing the sled, by a removable plate on the side of the column.

In one embodiment of the invention, the system comprises a lubrication integrated lubrication system.

The embodiment is particularly, but not exclusively, advantageous for ensuring a well working environment without the need of any service crew ensuring the lubrication.

In one embodiment of the invention, the motor is equipped with a brake, preferably said brake being mechanical electrically operated.

The embodiment is particularly, but not exclusively, advantageous for ensuring the position is kept at any time.

In a second aspect, the invention further relates to a method for lifting products, preferably said products being fish, wherein said method comprises the steps of:
- onloading products into a chute, preferably into a first end of the chute,
- onloading products into a container from the chute, preferably from a second end of the chute, said onloading being performed at a first height level,
- closing a sliding hatch of the chute,
- closing a gate of the container,
- raising the container via a raising arrangement,
   - preferably, the closing of the gate and/or the sliding hatch is performed simultaneously as raising the container,
- opening the gate of the container,
   - preferably, the opening of the gate is performed simultaneously as raising the container,
- aligning the container and a receiving section,
- offloading the product from the container into the receiving section, said offloading being performed at a second height level,
- closing a gate of the container,
- lowering the container via the raising arrangement,
   - preferably, the closing of the gate is performed simultaneously as lowering the container,
- opening the sliding hatch of the chute,
   - preferably, the opening of the gate is performed simultaneously as lowering the container,
- opening the gate of the container,
   - preferably, the opening of the gate is performed simultaneously as lowering the container,
- aligning the container and the chute,
- preferably repeat the steps,
wherein the steps of the method can be executed in any order and/or executed simultaneously.

The second aspect of the invention is particularly, but not exclusively, advantageous for providing a method improving the quality of the products being handled.

A preferred example of products are fish, and when handling fish (and any other products) with the method, a guarantee of not clipping, damaging, or anything the like is provided.

The method is moreover efficient and reliable.

Furthermore, if the method is performed on a boat, the method can be performed optimal even under the hazard environment of a boat.

In one embodiment of the invention:
- the closing of the gate and the sliding hatch are made as a sliding in an upwards direction, and
- the opening of the gate and the sliding hatch is made as a sliding in a downwards direction.

In one embodiment of the invention, the opening of the chute sliding hatch is performed while lowering the container, and wherein the opening is facilitated by a protrusion of the container being received into a receiving portion of the sliding hatch, said protrusion pushing the hatch downwards,
preferably wherein the opening of the sliding hatch is causing a counterweight to be raised up.

The embodiments are particularly, but not exclusively, advantageous for providing a method, wherein at least parts of the movements of the gate and/or hatches are mechanically constructed such as to ensure the opening and/or closing of the gate/hatches are provided in a controlled manner.

In one embodiment of the invention, the closing of the chute sliding hatch is performed while raising the container, preferably wherein the closing of the sliding hatch is facilitated by a counterweight moving in a downwards direction caused by gravity.

In one embodiment of the invention, the container is moving in a lowered speed, when the gates and/the sliding hatch is opening and/closing, compared to the moving speed, when the container is only being raised and/or lowered.

The embodiment is particularly, but not exclusively, advantageous for securing the correct positioning of the container.

In one embodiment of the invention:
- the time for the sliding hatch and the gate being open when onloading products into the container from the chute is a predetermined time,
   and/or
- the time for the gate being open when offloading products into the receiving section from the container is a predetermined time.

The embodiment is particularly, but not exclusively, advantageous for ensuring the correct amount of product, not too much and not too little, are handled in the method.

In a third aspect of the invention, the invention further relates to a computer-readable medium, preferably a storage medium, comprising instructions which, when executed by a computer, cause the computer to carry out one or more steps of the method.

The first, second and third aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Figure 1 illustrates a 3D drawing of the system with a container in a lower height level.
Figure 2 illustrates a 3D drawing of the system with a container in a higher height level
Figure 3 illustrates an exploded 3D drawing of the lift system.
Figure 4a-b illustrate the lift system from two side views.
Figure 5 illustrates the lift system from a front view.
Figure 6 illustrates the lift system from a top view.
Figure 7a-d illustrate an opening and closing of the container gate and chute hatch in a lower level.
Figure 8a-c illustrate an opening the container gate in a higher level.
Figure 9a-b illustrate the function of the counterweights.
Figure 10a illustrates a closed position of the chute hatch.
Figure 10b illustrates an open position of the chute hatch.
Figure 11a illustrates a tiltable bottom of the container in a lower height level.

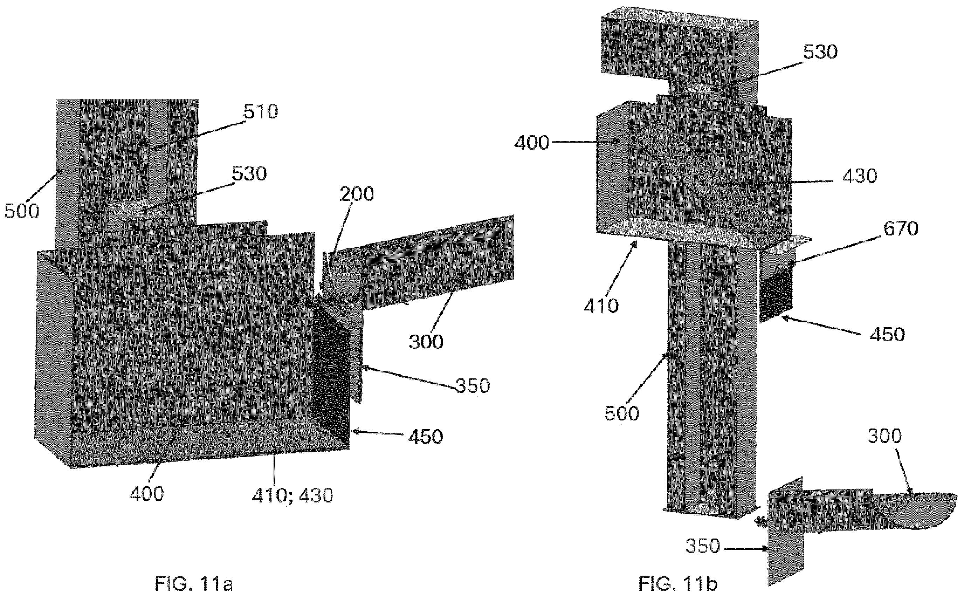

Figure 11a illustrates a tiltable bottom of the container hatch in a higher height level.

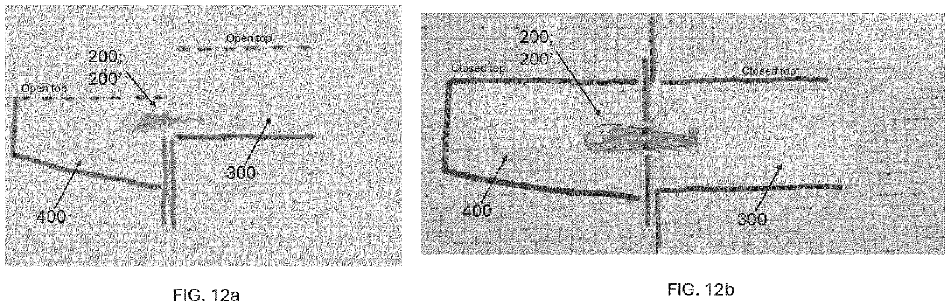

Figure 12a-b illustrate the difference of opening and closing hatches and gates between the invention (12a) and the known prior art (12b).

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

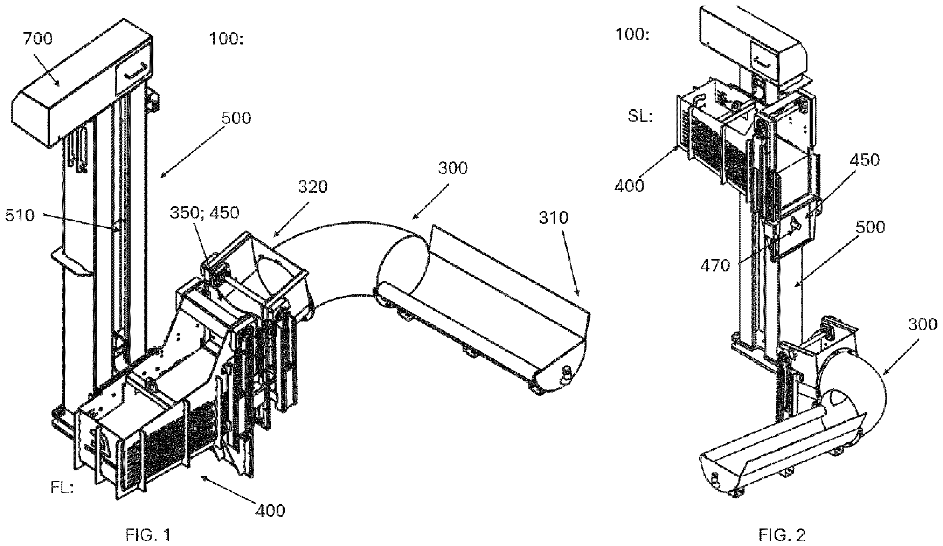

FIG. 1 and FIG. 2 illustrate both an embodiment as 3D drawing of the lift system 100 of the invention with a container 400, the only difference of the FIG. 1 and FIG. 2 is the container 400 of the system 100 being in a first height level FL - a lower height level - in FIG. 1 and being in a second height level SL - a higher height level - in FIG. 2.

The lift system 100 in FIG. 1 and 2 is suitable for lifting associated products 200, preferably said products being fish 200', said system comprising:
- a chute 300 for receiving the products 200, said chute comprising:
   - a first end 310 and a second end 320, preferably the chute 300 is being sloped towards the second end 320,
   - a chute sliding hatch 350 for holding in products 200 being in the chute 300 and releasing the products, when a container 400 is ready to receive the products, said sliding hatch 350 being arranged at the second end 320 of the chute 300,
- a container 400, wherein the container is attached to a raising arrangement 500, said container comprises:
   - a gate 450 for opening and closing the container 400, preferably a side end,
- a raising arrangement 500, for raising and lowering the container 400,
- a motor 700 for facilitating the raising and lowering of the container 400 via the raising arrangement 500, and
- a receiving section 600 for receiving the products 200 from the container 400,

wherein the chute 300 is arranged at a first height level FL,
wherein the receiving section 600 is arranged at a second height level SL,
wherein said second height level SL is above the first height level FL, and
wherein the container 400 can be raised and lowered at least between the first and the second height level via the raising arrangement 500.

In FIG. 1 and 2 the first end 310 and/or a first part of the chute 300 is open at the top, and the second end 320 and/or the second part of the chute 300 is a closed part. However, it should be understood that this is only a preferred embodiment. Moreover, FIG. 2 illustrates the protrusion of the container 470 positioned one the container gate 450.

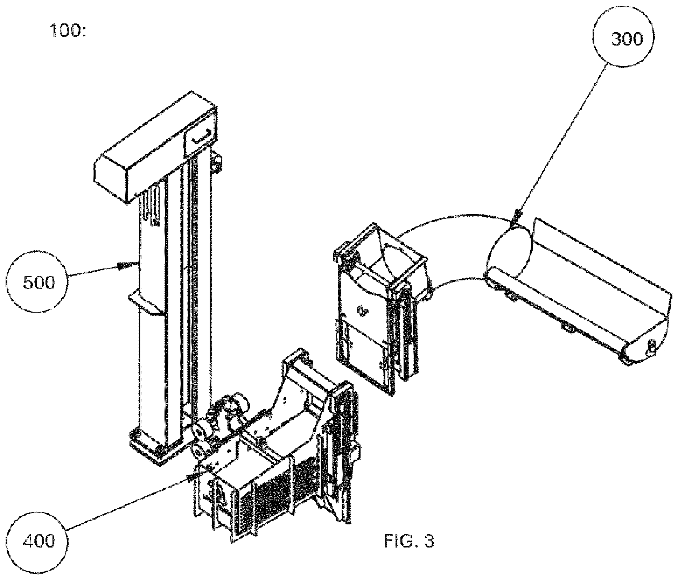

FIG. 3 illustrates an exploded 3D drawing of the lift system 100. The system is optimal for being manufactured in several parts/pieces and after the manufacturing being collected into one system.

This opportunity is essential and very optimal, when the system as an example is to be performing and thereby installed on a boat.

The part/pieces of the system illustrated I FIG. 3 is made in three overall pieces:
- The raising arrangement 500.
- The container 400.
- The chute 300.

However, it should be understood that the system can be made in both more or less pieces to be collected into a system 100.

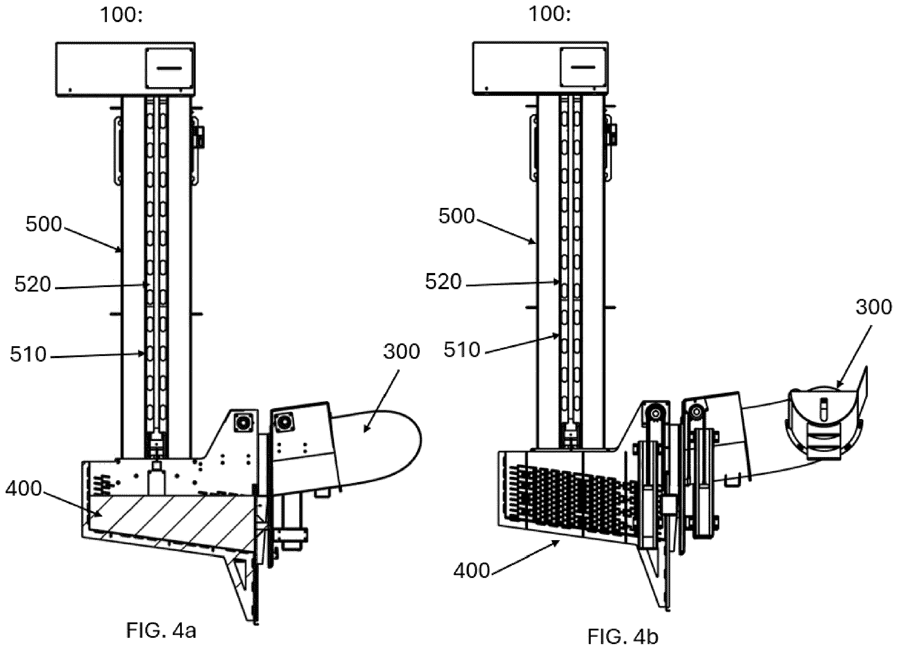

FIG. 4a-b illustrate the lift system 100 from two side views.

The lift system 100 in FIG. 4a and FIG. 4b illustrate a raising arrangement 500 being a column lift comprising:
- a sliding arrangement 510 for facilitating the raising and lowering of the container, preferably comprising rails,
- a chain 520, such as an endless chain, and
- a chain shaft,

wherein the container 400 is attached to the raising arrangement 500 via a sled (see FIG. 11), said sled being adapted for sliding in the sliding arrangement 510 of the raising arrangement 500, and
wherein the motor 700 is arranged at the upper part of the raising arrangement 500, preferably on the top of the raising arrangement.

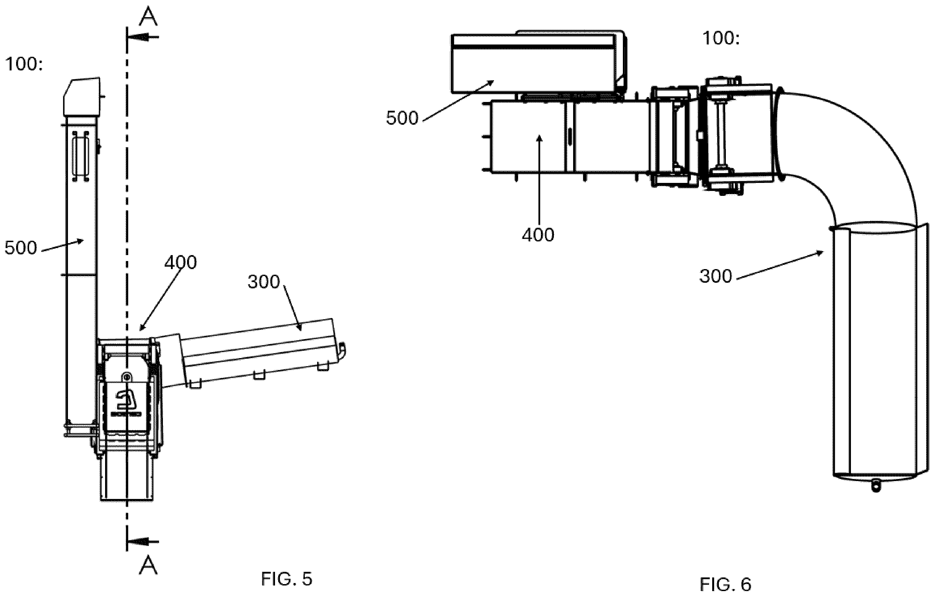

FIG. 5 illustrates the lift system 100 from a front view, and FIG. 6 illustrates the lift system 100 from a top view.

The system 100 illustrated corresponds to the system illustrated and described in FIG. 1 and Fig 2.

FIG. 5 moreover clearly illustrates a chute 300 having a first end 310 and a second end 320, wherein the chute 300 is being sloped towards the second end 320, such that the products are easily being led towards the container 400, preferably without any other impact than the sloped angle of the chute 300.

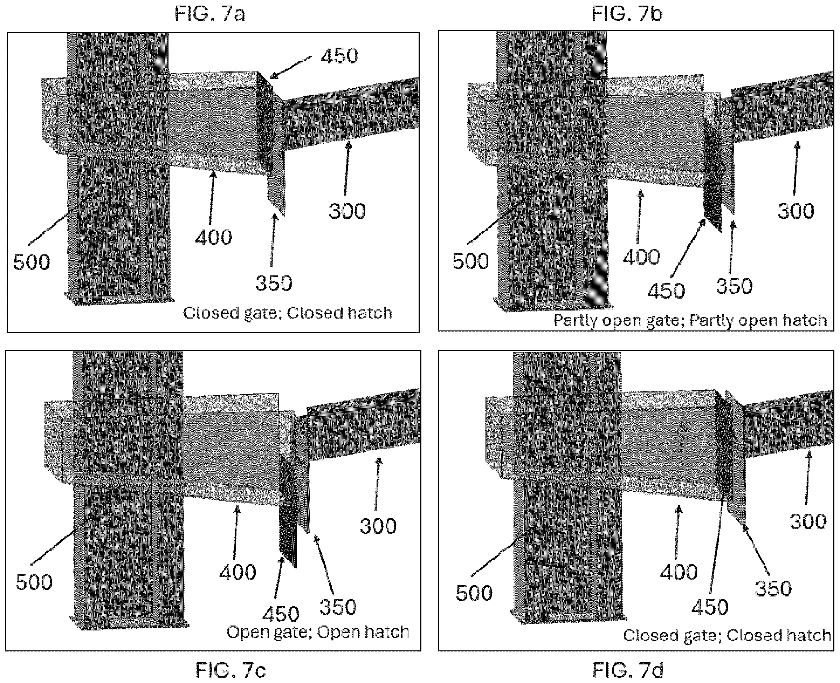

FIG. 7a-d illustrate an opening and closing of the container gate 450 and chute hatch 350 in a lower level FL - The first height level FL of the system 100.

The FIG. 7a illustrates the container 400 moving in a downwards direction, thereby being lowered, though not yet having its gate 450 opening.

The FIG. 7b illustrates the container 400 moving in a downwards direction, know starting to open the gate 450.

The FIG. 7c illustrates the container 400 in a first position - the lower(most) position - also illustrating the container gate 450 and the chute hatch 350 being in an open position.

The FIG. 7d illustrates the container 400 moving in an upwards direction, thereby being raised, also illustrating the container gate 450 and the chute hatch 350 being in a closed position again.

The gate 450 of the container 400 is adapted to:
- slide in a downward direction, when opening the gate 450, as seen in FIG. 7a and FIG. 7b and
- slide in an upward direction, when closing the gate 450, as seen in FIG. 7d.

Moreover in FIG. 7a-d is illustrated the chute sliding hatch 350 being adapted to:
- slide in a downwards direction, when opening the hatch 350, as seen in FIG. 7b and FIG. 7c, and
- slide in an upwards direction, when closing the hatch 350, as seen in FIG. 7d.

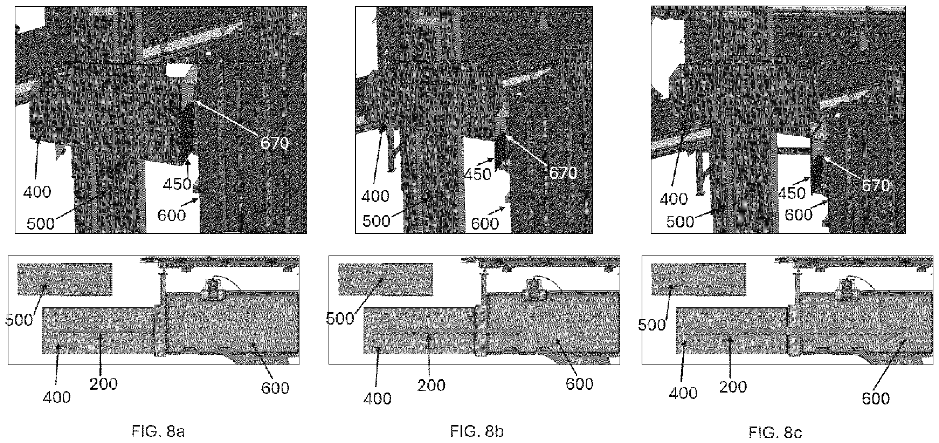

The gate 450 of the container 400 is adapted to open when:
- the container 400 is being lowered towards the bottom of the raising arrangement 500 - FIG. 7a, such that the gate 450 is at least partly open when the container 400 reaches the first height level FL - FIG. 7c,
- the container 400 is being raised towards the top of the raising arrangement 500, such that the gate 450 is fully open when the container 400 reaches the second heigh level SL (illustrated in FIG. 8c.

FIG. 8a-c illustrate an opening of the container 400 gate 450 in a higher level - The second height level SL of the system 100.

FIG. 8a illustrates the container 400 moving in an upwards direction, though not having the gate 450 of the container opening yet.

FIG. 8b illustrates the container 400 moving in an upwards direction starting to open the gate 450 of the container, the opening being provided of the receiving section 600 having received the protrusion 470 of the gate 450, and the container 400 still moving upwards, thereby the gate 450 is hold in one height while the rest of the container is raised towards a higher height SL.

FIG. 8c illustrates the container 400 having reached the second height level SL, being the higher(most) level, wherein the gate 450 of the container is at least substantially fully open. This provides the opportunity of the product 200 being in the container to be transferred into the receiving section 600, since the container 400 is in a higher height level than the receiving section 600 and the gate 450 is opened.

Within the invention, the chute sliding hatch 350 and/or the receiving section 600 comprises a receiving portion 370;670 for receiving a protrusion 470 of the container 400, such as a protrusion 470 arranged on the gate 450 of the container 400.

In FIG. 8a-c the receiving portion 670 of the receiving section 600 is illustrated.

The arrows in the lower figures in FIG. 8a-c illustrated the movement/transfer of products 200 from the container 400 to the receiving section 600.

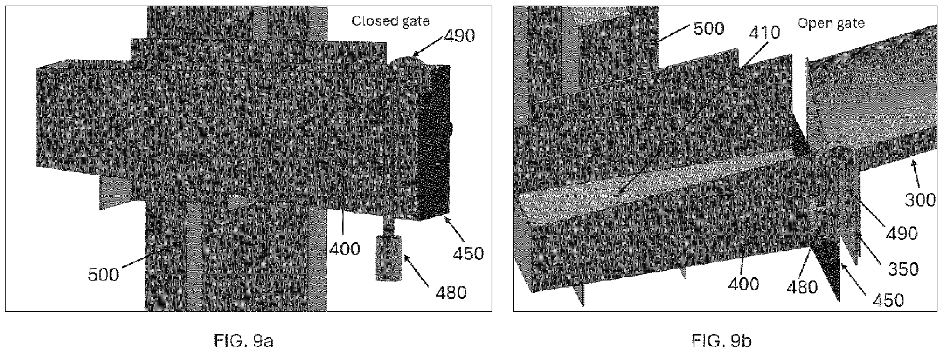

FIG. 9a-b illustrate the function of the counterweights 380;480.

The lift system 100 of the invention comprises in a preferred embodiment two counterweight arrangements:
- a container counterweight arrangement 480, arranged in connection to the container 400, preferably on the container, as illustrated in FIG. 9a-b
   - wherein said container counterweight arrangement 480 is activated, when a protrusion 470 of the container 400 is received in a receiving portion 370 of the chute 300 (FIG. 9b) or in a receiving portion 670 of the receiving section 600 (not shown).

When the protrusion 480 is no longer in a receiving portion 670 of the receiving section 600, the counterweight 480 provides the function of closing the gate 450 via the gravity, such that:
- the container counterweight arrangement 480 is adapted to provide a downwards movement of a counterweight, when the container gate 450 is opening,
   and
- the container counterweight arrangement 480 is adapted to provide an upwards movement of a counterweight, when the container gate 450 is closing.

Furthermore, the FIG. 9a and especially FIG. 9b illustrates the container counterweight arrangement 480 comprising a chain 490, being a stiff chain adapted to resist a push force and/or to provide a push force. The chain 490 of the counterweight arrangement 480 is adapted to provide a push force to the container gate 450, when the gate is opening in a downwards direction.

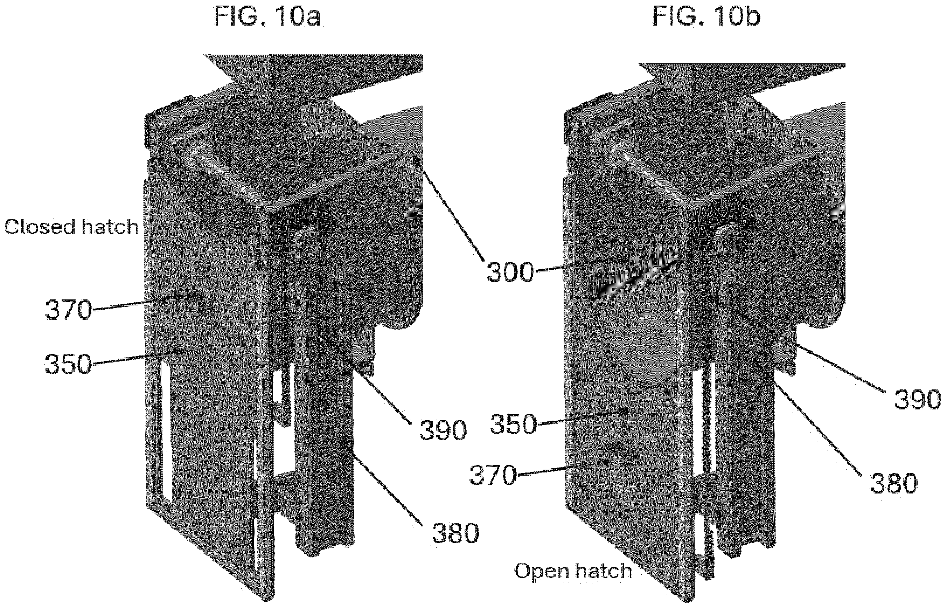

Figure 10a-b illustrate the chute hatch 350, wherein the chute sliding hatch 350 comprises a receiving portion 370 for receiving a protrusion 470 (not shown, See FIG 2) of the container 400.

Figure 10a illustrates a closed position of the chute hatch 350, wherein the receiving portion 370 of the chute sliding hatch 350 has not yet received the protrusion 470 of the container/gate 450.

Figure 10b illustrates an open position of the chute hatch 350, wherein (though not shown), the hatch is open, since it has received the protrusion 470 of the container/gate and has been pushed in a downwards direction, thereby opening the hatch 350 in a downwards direction.

When the protrusion 470 (not shown, See FIG 2) is no longer in a receiving section 370 of the chute 300, the counterweight provides the function of closing the gate 450 via the gravity, such that:
- the chute counterweight arrangement 380 is adapted to provide a downwards movement of a counterweight, when the chute sliding hatch 350 and/or container gate 450 is opening,
   and
- the chute counterweight arrangement 380 is adapted to provide an upwards movement of a counterweight, when the chute sliding hatch 350 and/or container gate 450 is closing.

As illustrated in FIG. 10a-b the chute counterweight arrangement 380 is arranged in connection to the chute 300, preferably on the chute (also overall illustrated in FIG. 1-3 and in FIG. 10), wherein said chute counterweight arrangement 380 is activated by the container, when said container is moving in a downwards direction towards the first height level FL (not shown).

Furthermore, the FIG. 10a-b are illustrating the chute counterweight arrangement 380 comprising a chain 390, being a stiff chain adapted to resist a push force and/or to provide a push force. The chain 390 of the container counterweight arrangement 380 is adapted to provide a push force to the chute hatch 350, when the hatch is opening in a downwards direction and is adapted to utilize the gravity to provide an upwards direction of the chute hatch 350, such that the hatch is closing.

Moreover, it is illustrated, that the chain 390 is being connected to the chute counterweight 380 in a first end of the chain and to the chute hatch in a second end of the chain.

FIG. 11a illustrates a tiltable bottom of the container 400 in a lower height level FL. As illustrated, the bottom is not tilted, when the container is in the first height level, being the lower height level, and being when receiving products from the chute 300 to the container 400.

Figure 11b illustrates a tiltable bottom 430 of the container hatch in a higher height level SL.

As illustrated, the bottom is tilted 430, when the container 400 is in the second height level SL, being the higher height level, and being when the products 200 of the container 400 is raised and is to be transferred and received into the receiving portion 600.

Within the invention and as illustrated in FIG. 11b, the tiltable bottom 430 is preferably an additional bottom arranged above a main bottom 410 of the container 400.

As an alternative to (or as an addition to) the above described and the illustrated in the FIG. 11a-b, the container may comprise a sloped bottom, such as a fixed bottom 410 being sloped.

In FIG 11a-b the container 400 is attached to the raising arrangement 500 via a sled (530), said sled (530) being adapted for sliding in the sliding arrangement (510) of the raising arrangement 500.

Figures 12a-b illustrate the difference of opening and closing the hatch 350 and the gate 450 between the invention (12a) and the known prior art (12b).

From the prior art, it is known that products such as fishes 200' are damaged when transferred in a lifting system, however the new lift system 100 and the new method of transferring and lifting the fishes are ensuring the fishes not to be damaged by performing:
A method for lifting products, preferably said products being fish, preferably with a lifting system according to the one illustrated in the figures or any other suitable system 100, wherein said method comprises the steps of:
- onloading products 200 into a chute 300, preferably into a first end 310 of the chute,
- onloading products into a container 400 from the chute 300, preferably from a second end 320 of the chute, said onloading being performed at a first height level FL,
- closing a sliding hatch 350 of the chute 300,
- closing a gate 450 of the container 400,
- raising the container 400 via a raising arrangement 500,
   - preferably, the closing of the gate 450 and/or the sliding hatch 350 is performed simultaneously as raising the container 400,
- opening the gate 450 of the container 400,
   - preferably, the opening of the gate 450 is performed simultaneously as raising the container 400,
- aligning the container 400 and a receiving section 600,
- offloading the product 200 from the container into the receiving section 600, said offloading being performed at a second height level SL,
- closing a gate 450 of the container 400,
- lowering the container 400 via the raising arrangement 500,
   - preferably, the closing of the gate 450 is performed simultaneously as lowering the container 400,
- opening the sliding hatch 350 of the chute 300,
   - preferably, the opening of the gate 450 is performed simultaneously as lowering the container 400,
- opening the gate 450 of the container 400,
   - preferably, the opening of the gate 450 is performed simultaneously as lowering the container 400,
- aligning the container 400 and the chute 300,
- preferably repeat the steps,
wherein the steps of the method can be executed in any order and/or executed simultaneously.

Moreover, the method may, but not necessarily, comprise one or more steps of:
- the closing of the gate 450 and the sliding hatch 350 are made as a sliding in an upwards direction, and
- the opening of the gate 450 and the sliding hatch 350 is made as a sliding in a downwards direction.

Wherein the opening of the chute sliding hatch 350 is performed while lowering the container 400, and wherein the opening is facilitated by a protrusion 470 of the container 400 being received into a receiving portion 370 of the sliding hatch 350, said protrusion pushing the hatch downwards, preferably wherein the opening of the sliding hatch 350 is causing a counterweight 380; 480 to be raised up,

Wherein the closing of the chute sliding hatch 350 is performed while raising the container 400, preferably wherein the closing of the sliding hatch 350 is facilitated by a counterweight 380;480 moving in a downwards direction caused by gravity.

Wherein the container 400 is moving in a lowered speed, when the gate 450 and/the sliding hatch 350 is opening and/closing, compared to the moving speed, when the container 400 is only being raised and/or lowered.

Wherein the time for the sliding hatch 350 and the gate 450 being open when onloading products 200 into the container 400 from the chute 300 is a predetermined time, and/or
wherein the time for the gate 450 being open when offloading products 200 into the receiving section 600 from the container 400 is a predetermined time.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### REFERENCE LIST

Lift system (100)
Products (200)
   Fish (200')
Chute (300)
   First end (310)
   Second end (320)
   Sliding hatch (350)
   Receiving portion of chute (370)
   Chute counterweight arrangements (380)
   Chain of chute counterweight (490)
Container (400)
   Sloped bottom (410)
   Sloped sides (420)
   Tiltable bottom (430)
   Gate (450)
   Protrusion (470)
   Container counterweight arrangements (480)
   Chain of container counterweight (490)
Raising arrangement (500)
   Sliding arrangement (510)
   Chain (520)
   Sled (530)
Receiving section (600)
   Receiving portion of receiving section (670)
Motor (700)
First height level (FL),
Second height level (SL)

## Claims

1. A lift system (100) for lifting associated products (200), preferably said products being fish, said system comprising:
- a chute (300) for receiving the products, said chute comprising:
- a first end (310) and a second end (320), preferably the chute (300) is being sloped towards the second end (320),
- a chute sliding hatch (350) for holding in products (200) being in the chute (300) and releasing the products when a container (400) is ready to receive the products,
said sliding hatch (350) being arranged at the second end (320) of the chute (300),
- a container (400), wherein the container is attachable to a raising arrangement (500), said container comprises:
- a gate (450) for opening and closing the container, preferably a side end of the container (400),
- a raising arrangement (500), for raising and lowering the container,
- a motor (700) for facilitating the raising and lowering of the container (400) via the raising arrangement (500), and
- a receiving section (600) for receiving the products (200) from the container (400),
wherein the chute (300) is arranged at a first height level (FL),
wherein the receiving section (600) is arranged at a second height level (SL),
wherein said second height level (SL) is above the first height level (FL), and
wherein the container (400) can be raised and lowered at least between the first height level (FL) and the second height level (SL) via the raising arrangement (600).

2. A lift system (100) according to one or more of the preceding claims, wherein the raising arrangement (500) comprises:
- a sliding arrangement (510) for facilitating the raising and lowering of the container (400), preferably comprising rails,
- a chain (520), such as an endless chain, and
- a chain shaft.

3. A lift system (100) according to one or more of the preceding claims, wherein the raising arrangement (500) is a column lift.

4. A lift system (100) according to one or more of the preceding claims, wherein the container (400) is attached to the raising arrangement (500) via a sled, said sled being adapted for sliding in the sliding arrangement (510) of the raising arrangement (500).

5. A lift system (100) according to one or more of the preceding claims, wherein the system comprises an encoder for providing feedback for speed control of the raising of the container (400), preferably said encoder being arranged on the raising arrangement (500), more preferably on a chain shaft of the raising arrangement.

6. A lift system (100) according to one or more of the preceding claims, wherein the motor (600) is arranged at the upper part of the raising arrangement (500), preferably on the top of the raising arrangement.

7. A lift system (100) according to one or more of the preceding claims, wherein one or more sensors are arranged on the container (400), preferably on the upper part of the container.

8. A lift system (100) according to claim 7, wherein the one or more sensors are:
- position sensor(s) for detecting the top and/or bottom position of the container (400), and/or
- end position sensor(s) for ensuring the container (400) does not run past a predetermined end position.

9. A lift system (100) according to one or more of the preceding claims, wherein the container (400) comprises:
- a sloped bottom (410), and/or
- one or more sloped sides (420).

10. A lift system (100) according to one or more of the preceding claims, wherein the container comprises:
- a tiltable bottom (430),
preferably the tiltable bottom (430) is an additional bottom arranged above a main bottom (450) of the container (400).

11. A lift system (100) according to one or more of the preceding claims, wherein the gate (450) of the container (400) is adapted to:
- slide in a downward direction, when opening the gate (450), and
- slide in an upward direction, when closing the gate (450).

12. A lift system (100) according to claim 11, wherein the container (400) comprises sliding means for facilitating the siding of the gate (450), and
preferably wherein the sliding of the gate is adapted to be activated mechanically.

13. A lift system (100) according to one or more of the preceding claims, wherein the gate (450) of the container (400) is adapted to open when:
- the container (400) is being lowered towards the bottom of the raising arrangement (500), such that the gate (450) is at least partly open when the container (400) reaches the first height level (FL),
- the container (400) is being raised towards the top of the raising arrangement (500), such that the gate (450) is fully open when the container (400) reaches the second heigh level (SL).

14. A lift system (100) according to one or more of the preceding claims, wherein the chute (300) sliding hatch (350) is adapted to:
- slide in a downward direction, when opening the hatch (350), and
- slide in an upwards direction, when closing the hatch (350).

15. A lift system (100) according to one or more of the preceding claims, wherein the chute (300) sliding hatch (350) and/or the receiving section (600) comprises a receiving portion (370; 670) for receiving a protrusion (470) of the container (400).

16. A lift system (100) according to any of the preceding claims, wherein the system further comprises two counterweight arrangements (380; 480):
- a chute counterweight arrangement (380), arranged in connection to the chute (300), preferably on the chute,
- wherein said chute counterweight arrangement (380) is activated by the container (400), when said container is moving in a downwards direction towards the first height level (FL),
and/or
- a container counterweight arrangement (480), arranged in connection to the container (400), preferably on the container,
- wherein said container counterweight arrangement (480) is activated, when a protrusion (470) of the container (400) is received in a receiving portion (370) of the chute (400) or in a receiving portion (670) of the receiving section (600).

17. A lift system (100) according to claim 16, wherein:
- the chute counterweight arrangement (380) and/or the container counterweight arrangement (480) is adapted to provide a downwards movement of a counterweight, when the chute sliding hatch (350) and/or container gate (450) is opening,
and
- the chute counterweight arrangement (380) and/or the container counterweight arrangement (480) is adapted to provide an upwards movement of a counterweight, when the chute sliding hatch (350) and/or container gate (450) is closing.

18. A lift system (100) according to one or more of the preceding claims, wherein the lift system is arranged on a boat.

19. A method for lifting products (200), preferably said products being fish, preferably with a lifting system (100) according to one or more of claim 1-18, wherein said method comprises the steps of:
- onloading products (200) into a chute (300), preferably into a first end (310) of the chute,
- onloading products (200) into a container (400) from the chute (300), preferably from a second end (320) of the chute, said onloading being performed at a first height level (FL),
- closing a sliding hatch (350) of the chute (300),
- closing a gate (450) of the container (400),
- raising the container (400) via a raising arrangement (500),
- preferably, the closing of the gate (450) and/or the sliding hatch (350) is performed simultaneously as raising the container (400),
- opening the gate (450) of the container (400),
- preferably, the opening of the gate (450) is performed simultaneously as raising the container (400),
- aligning the container (400) and a receiving section (600),
- offloading the product (200) from the container (400) into the receiving section (600), said offloading being performed at a second height level (SL),
- closing a gate (450) of the container (400),
- lowering the container (400) via the raising arrangement (600),
- preferably, the closing of the gate (450) is performed simultaneously as lowering the container (400),
- opening the sliding hatch (350) of the chute (300),
- preferably, the opening of the gate (450) is performed simultaneously as lowering the container (400),
- opening the gate (450) of the container (400),
- preferably, the opening of the gate (450) is performed simultaneously as lowering the container (400),
- aligning the container (400) and the chute (300),
- preferably repeat the steps until a portion of products has been raised from a first height level (FL) to a second height level (SL),
wherein the steps of the method can be executed in any order and/or executed simultaneously.

20. A method for lifting according to claim 19, wherein:
- the closing of the gate (450) and the sliding hatch (350) is made as a sliding in an upwards direction, and
- the opening of the gate (450) and the sliding hatch (350) is made as a sliding in a downwards direction.

21. A method for lifting according to claim 19-20, wherein the opening of the chute sliding hatch (350) is performed while lowering the container (400), and wherein the opening is facilitated by a protrusion (480) of the container (400) being received into a receiving portion (370) of the sliding hatch (350), said protrusion (470) pushing the hatch (350) downwards,
preferably wherein the opening of the sliding hatch (350) is causing a counterweight to be raised up.

22. A method for lifting according to claim 19-21, wherein the closing of the chute sliding hatch (350) is performed while raising the container (400),
preferably wherein the closing of the sliding hatch (350) is facilitated by a counterweight moving in a downwards direction caused by gravity.

23. A method for lifting according to claim 19-22, wherein the container (400) is moving in a lowered speed, when the gate (450) and/or the sliding hatch (350) is opening and/or closing, compared to the moving speed, when the container is only being raised and/or lowered.

24. A method for lifting according to claim 19-23, wherein:
- the time for the sliding hatch (350) and the gate (450) being open when onloading products (200) into the container (400) from the chute (300) is a predetermined time,
and/or
- the time for the gate (450) being open when offloading products (200) into the receiving section (600) from the container (400) is a predetermined time.

25. A computer-readable medium, preferably a storage medium, comprising instructions which, when executed by a computer, cause the computer to carry out one or more steps of the method of claim 19-24.
